# EUROPÄISCHE PATENTANMELDUNG

(11) **EP 0 943 940 A2**
(43) Veröffentlichungstag der Anmeldung: **22.09.1999**
(21) Anmeldenummer: 99104702.8
(22) Anmeldetag: 10.03.1999
(51) Int. Cl.: G02B 6/38

(54) **Optisches Verbindungsgehäuse und Verfahren zur Verbindung von optischen Leitungen**

(30) Priorität: 18.03.1998 DE 19811705
(71) Anmelder: DaimlerChrysler AG, 70567 Stuttgart (DE)
(72) Erfinder: Huber, Hans-Peter, 89233 Neu-Ulm (DE); Rode, Manfred, 89250 Senden (DE)

(57) **Zusammenfassung**

Die Erfindung betrifft ein Verbindungsgehäuse für optische Leitungen, das aus einem oberen und unteren Gehäuseteil besteht, die nach Art eines Druckknopfes miteinander verbunden werden. Bei verbundenem Gehäuse tritt zwischen den optischen Leitungen eine Freistrahlstrecke auf, in der optische Elemente zur Lichtstrahlbündelung und/oder - umlenkung angeordnet sind.

## Beschreibung

Die Erfindung betrifft ein optisches Verbindungsgehäuse nach dem Oberbegriff des Patentanspruch 1 und ein Verfahren zur Verbindung nach Patentanspruch 9.

Die Erfindung findet Verwendung bei optischen Kurzstreckenverbindungen zwischen optischen Leitungen, z.B. Lichtwellenleitern, Fasern, Adern, Kabel oder einer optischen Leitung mit optischen Wandlern, z.B.Sender- und Empfängermodule.

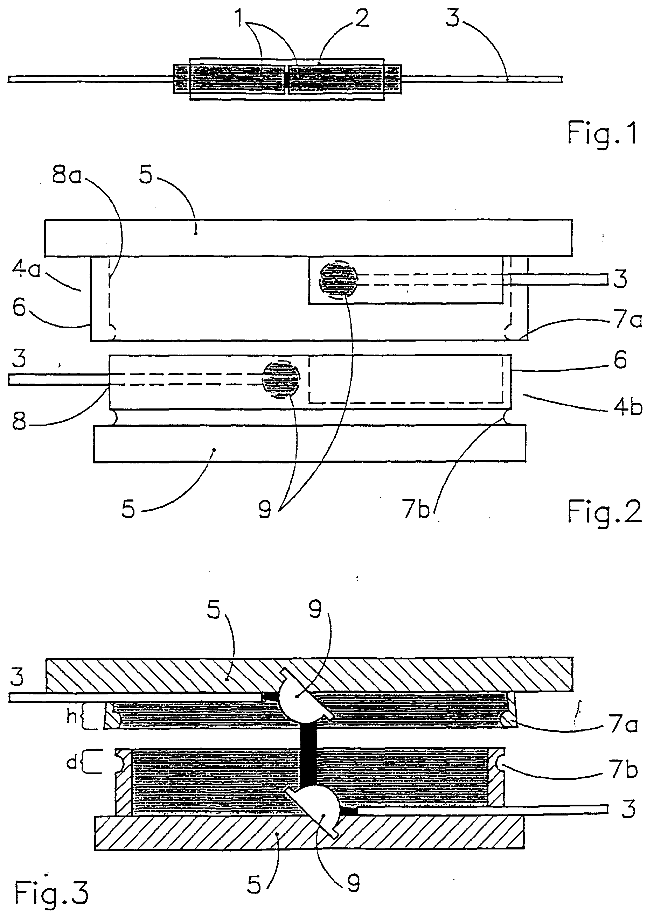

Zur lösbaren Verbindung optischer Leitungen oder deren Anbindung an optische Wandler gibt es unterschiedliche Stecktypen. Die laterale Positionierung und axiale Ausrichtung der Strahlachse der optischen Leitung werden durch die Einführung eines Steckerstifts 1 in eine Führungshülse 2 festgelegt, wobei die Mantelfläche der Hülse zur Führung und Ausrichtung des Steckerstiftes und der in dessen im Zentrum angeordneten optischen Leitung 3 dient (Fig.1). Um eine gute axiale Führung zu gewährleisten, muß der Steckerstift über eine ausreichende Länge in der Hülse geführt werden. Zum Aufbau und Lösen der Verbindung muß bei derartigen Steckern ein zusätzlicher Freiraum vorhanden sein, um da Stift in die Hülse einführen oder aus dieser herausziehen zu können und die optische Leitung längs und seitlich auslenken zu können, unter Berücksichtigung des erlaubten Krümmungsradius der optischen Leitung.

Weiterhin sind Linsenstecker mit aufgeweitetem Parallelstrahl bekannt, bei denen zwischen den optischen Leitungen innerhalb der Führungshülse eine kurze Freistrahlstrecke überbrückt wird . Um Koppelverluste durch Aufweitung des aus der optischen Leitung austretenden Lichtstrahlbündels zu vermeiden, sind zwischen den Leitungsenden Kollimationslinsen angeordnet, derart, daß die Freistrahlstecke durch Parallellichtbündel überbrückt wird.

Die Aufgabe der Erfindung besteht darin, ein Verbindungsgehäuse für optische Leitungen anzugeben, das eine kurze, kompakte Bauform besitzt und ein Verfahren mit dem die optischen Leitungen einfach und flexible verbunden und getrennt werden.

Das Verbindungsgehäuse ist in Patentanspruch 1 und das Verfahren in Patentanspruch 9 beschrieben. Die Unteransprüche enthalten vorteilhafte Ausgestaltungen und Weiterbildungen.

Die erfindungsgemäße Verbindung zwischen optischen Leitungen oder die Anbindung optischer Leitungen an optoelektronische Module erfolgt nach Art eines Druckknopfes. Das Verbindungsgehäuse besteht aus einem oberen und unteren Gehäuseteil mit einem kreisförmigen Gehäuseboden und einer Gehäusewand. Die Gehäuseteile sind durch Druck ineinander einrastbar und durch Zug wieder trennbar. Das Verbindungsgehäuse hat dadurch eine kompakte Bauform mit einem Durchmesser von etwa 15 mm und einer Höhe von etwa 5-10 mm. Die optischen Leitungen werden vorteilhafterweise parallel zum Gehäuseboden durch Öffnungen in der Gehäusewand in das Verbindungsgehäuse eingeführt, so daß die Verbindung und Trennung der Gehäuseteile senkrecht zur optischen Leitungsrichtung erfolgt. Dadurch können die optischen Leitungen senkrecht zur Leitungsachse verbunden oder getrennt werden.

Ein weiterer Vorteil besteht darin, daß das obere und untere Gehäuseteil in verbundenem Zustand in der Kontaktebene frei drehbar ist und dadurch eine beliebige Richtungsänderung der optischen Leitungen in einer Ebene gegeben ist.

Die Erfindung wird im folgenden anhand von Ausführungsbeispielen beschrieben unter Bezugnahme auf schematische Zeichnungen.
Fig. 1 zeigt einen Verbindungstecker nach dem Stand der Technik.
Fig. 2 stellt ein Verbindungsgehäuse dar, bei dem die optischen Leitungen in einer festen Ausrichtung zueinander angeordnet sind.
Fig. 3 stellt ein Verbindungsgehäuse dar, bei dem die optischen Leitungen in einer Ebene beliebig zueinander drehbar sind.

In einem ersten Ausführungsbeispiel gemäß Fig.2 besteht das Verbindungsgehäuse aus einem oberen und unteren Gehäuseteil 4a, 4b. Die Gehäuseteile sind aus einem kreisförmigen Gehäuseboden 5 und einer Gehäusewand 6 aufgebaut. Die Gehäusewand des oberen Gehäuseteils ist federnd ausgestaltet, z.B. als dünnes federndes flächiges Teil oder als Federkranz mit Einrastnippel 7a. Geeignete Materialien zur Herstellung der Gehäuseteile sind z.B. Metall oder Kunststoff.
In das untere Gehäuseteil 4b ist in die Gehäusewand in unmittelbarer Nähe des Gehäusebodens eine Rille 7b eingebracht. Beide Gehäuseteile enthalten Öffnungen 8 in der Gehäusewand, in die z.B. je eine optische Leitung 3 eingeführt ist. Die Öffnungen 8 in der Gehäusewand sind z.B. Bohrungen mit einer Führungshülse für die optischen Leitungen oder lediglich Bohrungen in der Gehäusewand, wenn die Dicke der Gehäusewand für eine stabile Führung und Fixierung der optischen Leitungen ausreicht.
Die Gehäusewände enthalten weitere Öffnungen 8a, z.B. Schlitze in der Gehäusewand oder bei Gehäuseteilen mit Führungshülsen Öffnungen mit dem Querschnitt der Hülse, an den Stellen, an denen beim Ineinanderfügen der Gehäuseteile die optischen Leitungen des anderen Gehäuseteils in das Gehäuse einzuführen sind.

Beim Ineinanderfügen der Gehäusteile nach Art eines Drucknopfes wird das obere Gehäuseteil in die Rille des unteren Gehäuseteils gedrückt. Die Öffnungen in den Gehäuseteilen sind derart angeordnet und ausgestaltet, daß bei ineinandergefügten Gehäuseteilen die optischen Leitungen parallel zum Gehäuseboden verlaufen und zwischen den zu verbindenden Leitungen lediglich eine kurze Freistrahlstrecke liegt.
Um Koppelverluste durch Aufweitung des aus der optischen Leitung austretenden Lichtstrählbündels zu vermeiden, befinden sich an den Leitungsenden im Gehäuse, z.B. am Gehäuseboden oder an der Führungshülse optische Elemente 9, z.B. Kollimationslinsen, derart, daß die Freistrahlstrecke durch ein Parallellichtstrahlbündel überbrückt wird. Sind die zu verbindenden optischen Leitungen nicht in der gleichen optischen Strahlachse angeordnet, sondern in verschiedenen Winkeln in der Kontaktebene der Gehäuse zueinander angeordnet, werden durch Einfügen eines optischen Elementes in den Strahlengang, z.B. eines Ablenkprismas oder Spiegels, die Lichtstrahlbündel einer optischen Leitung in die jeweilige andere optische Leitung umgelenkt. Bei hybridem Aufbau sind die optischen Elemente beispielsweise am unteren Gehäuseboden befestigt oder bei monolithischem Aufbau durch geeignete Spritzgußverfahren in den Gehäuseboden integriert.
Um die Gehäuseteile zu trennen hat beispielsweise der obere Gehäuseboden einen größeren Durchmesser als die Gehäusewand und das untere Gehäuseteil. Dadurch kann das obere Gehäuseteil durch Zug an diesem Überhang vom unteren Gehäuseteil getrennt werden.
In einem zweiten Ausführungsbeispiel gemäß Fig.3 sind die optischen Leitungen 3 durch Öffnungen unmittelbar in der Nähe des Gehäusebodens 5 in das Verbindungsgehäuse eingebracht. Die Fixierung der optischen Leitungen erfolgt beispielsweise durch eine am Gehäuseboden angeordnete Führungshülse. Eine Rille 7 ist oberhalb der Öffnungen für die optischen Leitungen in der Gehäusewand des unteren Gehäuseteils eingebracht. Der Abstand d der Rille 7 vom oberen Gehäusewandrand entspricht in etwa der Gehäusewandhöhe h des oberen Gehäuseteils. Im oberen Gehäuseteil ist am Innenrand der Gehäusewand eine der Form der Rille entsprechende Einrastnippel 7a angebracht, so daß beim Ineinanderfügen der Gehäuseteile das obere Gehäuseteil in das untere Gehäuseteil einrastet. Durch Ausgestaltung des oberen Gehäuseteiles mit einem das untere Gehäuseteil überlappenden Gehäuseboden sind die Gehäuseteile durch Zug wieder lösbar.
Vorteilhaft bei einer derartigen Anordnung der optischen Leitungen ist, daß in verbundenem Zustand die Gehäuseteile in der Kontaktebene frei drehbar sind und die optischen Leitungen in der Kontaktebene in beliebigen Winkeln zueinander angeordnet
werden können. Die optischen Leitungen sind senkrecht zur Kontaktebene der Gehäuseteile vorteilhafterweise in einem Winkel von 90° übereinander angeordnet.
Durch optische Elemente 9, z.B eine Halbkugellinse mit Spiegelfläche, die an den jeweiligen optischen Leitungsenden beispielsweise mit dem Gehäuseboden verbunden oder in den Gehäuseboden integriert sind, erfolgt gleichzeitig eine 90°-Strahlablenkung und Kollimation der Lichtstrahlen in der Freistrahlstrecke zwischen den optischen Leitungen.
In einem weiteren Ausführungsbeispiel mit einer 90°-Strahlablenkung sind über Öffnungen im Gehäuseboden eines Gehäuseteils die optischen Leitungen in das Verbindungsgehäuse eingebracht. Der weitere Aufbau der Gehäuseteile und der optischen Elemente erfolgt gemäß dem zweiten Ausführungsbeispiel. Diese Verbindung eignet sich insbesondere für Steckkarten mit einer optischen Leitung einer Backplane.
Das erfindungsgemäße Verbindungsgehäuse kann auch zum Anschluß einer optischen Leitung an optoelektronische Module, z.B. Sender, Empfänger verwendet werden. Ein Gehäuseteil ist dabei am optischen Modul als Buchse angebracht und mit dem anderen Gehäuseteil ist die optische Leitung angeschlossen. Die optischen Module können aber auch als Chip in ein Gehäuseteil z.B. im Gehäuseboden integriert sein und die optischen Leitungen werden z.B. durch Öffnungen im Gehäuseboden an die Chip herangeführt.

## Patentansprüche

1. Verbindungsgehäuse für optische Leitungen, das optische Elemente zur Führung von Lichtstrahlbündeln enthält, dadurch gekennzeichnet,
- daß das Verbindungsgehäuse aus einem oberen und unteren Gehäuseteil besteht, die aus einem kreisförmigen Gehäuseboden und einer Gehäusewand, die Öffnungen für die optischen Leitungen enthalten, aufgebaut sind,
- daß in die untere Gehäusewand eine Rille eingebracht ist und die obere Gehäusewand als Federteil ausgestaltet ist, derart, daß durch Druck die Gehäuseteile schlüssig ineinander einrastbar und durch Zug wieder trennbar sind,
- daß bei geschlossenem Verbindungsgehäuse in der zwischen den zu verbindenden optischen Leitungen eine Freistrahlstrecke auftritt, und
- daß in der Freistrahlstrecke optische Elemente zur Lichtstrahlbündelung und/oder - umlenkung angeordnet sind.

2. Verbindungsgehäuse nach Anspruch 1, dadurch gekennzeichnet,
- daß in eine Öffnung der Gehäusewand beider Gehäuseteile mindestens je eine optische Leitung parallel zum Gehäuseboden eingebracht ist,
- daß im unteren Gehäuseteil in der Gehäusewand in unmittelbarer Nähe des Gehäusebodens eine Rille eingebracht ist, und
- daß die Gehäusewände beider Gehäuseteile weitere Öffnungen an den Stellen enthalten, an denen beim Ineinanderfügen der Gehäuseteile die optischen Leitungen des anderen Gehäusteiles in das Gehäuse einzuführen sind.

3. Verbindungsgehäuse nach Anspruch 2, dadurch gekennzeichnet, daß durch festvorgegebenene Öffnungen in den Gehäusewänden der beiden Gehäuseteile, die optischen Leitungen in der Kontaktebene der Gehäuseteile in verschiedenen Winkeln zueinander angeordnet sind.

4. Verbindungsgehäuse nach Anspruch 1, dadurch gekennzeichnet,
- daß in beiden Gehäuseteilen die Öffnungen für die optischen Leitungen unmittelbar in der Nähe des Gehäusebodens in der Gehäusewand oder im Gehäuseboden angebracht sind,
- daß die Rille oberhalb der Öffnungen für die optischen Leitungen in die Gehäusewand des unteren Gehäuseteils eingebracht ist mit einem Abstand vom oberen Wandrand in etwa der Gehäusewandhöhe des oberen Gehäuseteils,
- daß im oberen Gehäuseteil am Innenrand der Gehäusewand ein der Form der Rille entsprechender Einrastnippel angebracht ist, derart, daß beim Ineinanderfügen der Gehäuseteile das obere Gehäuseteil in das untere Gehäuseteil einrastet und durch Zug wieder lösbar ist, und
- daß in verbundenem Zustand die Gehäuseteile in der Kontaktebene gegeneinander drehbar sind.

5. Verbindungsgehäuse nach einem der vorhergehenden Ansprüche, dadurch gekennzeichnet, daß die optischen Leitungen an den im Gehäuseinnern befindlichen Leitungsenden Linsen zur Parallellichtstrahlbündelung enthalten.

6. Verbindungsgehäuse nach einem der vorhergehenden Ansprüche, dadurch gekennzeichnet,
- daß zur Lichtstrahlumlenkung im Gehäuseinneren in den Strahlengang der optischen Leitungen optische Elemente eingebracht sind, und
- daß die optischen Elemente am Gehäuseboden befestigt oder in das Gehäuseteil integriert sind.

7. Verbindungsgehäuse nach einem der vorhergehenden Ansprüche, dadurch gekennzeichnet, daß optoelektronische Module in den Gehäuseteilen befestigt und mit den optischen Leitungen verbunden sind.

8. Verbindungsgehäuse nach einem der vorhergehenden Ansprüche, dadurch gekennzeichnet, daß zur Führung der optischen Leitungen Führungshülsen in die Öffnungen in den Gehäuseteilen eingebracht sind.

9. Verfahren zur Verbindung von optischen Leitungen, dadurch gekennzeichnet, daß die Verbindung mit einem Gehäuse nach Art eines Druckknopfes hergestellt wird, und daß die optischen Leitungen senkrecht zur Leitungsachse verbunden oder getrennt werden.
